# EUROPEAN PATENT SPECIFICATION

(11) **EP 4 034 362 B1**
(45) Date of publication and mention of the grant of the patent: **30.10.2024**
(21) Application number: 20780355.2
(22) Date of filing: 16.09.2020
(51) Int. Cl.: B29C 45/14, G10K 11/172, B32B 3/12, B60R 13/08, G10K 11/162, B29L 31/60

(54) **ARTICLES INCLUDING PANELS AND MOLDED STRUCTURES AND METHODS OF MAKING SAME**
GEGENSTÄNDE, DIE PLATTEN UND GEFORMTE STRUKTUREN EINSCHLIESSEN, UND VERFAHREN ZU DEREN HERSTELLUNG
ARTICLES COMPRENANT DES PANNEAUX ET DES STRUCTURES MOULÉES ET PROCÉDÉS DE FABRICATION ASSOCIÉS

(30) Priority: 23.09.2019 US 201962904132 P
(43) Date of publication of application: 03.08.2022
(73) Proprietor: 3M Innovative Properties Company, Saint Paul, Minnesota 55133-3427 (US)
(72) Inventor: MCNULTY, Jason D., Saint Paul, Minnesota 55133-3427 (US); PERIN, Dino, Saint Paul, Minnesota 55133-3427 (US); JONZA, James M., Saint Paul, Minnesota 55133-3427 (US)
(74) Representative: Mathys & Squire
(86) International application number: PCT/IB2020/058635
(87) International publication number: WO 2021/059088

(56) References cited:
- EP-A1- 3 447 760
- WO-A1-2018/034949
- DE-A1- 2 114 181
- US-A- 3 963 094

## Description

### Background

Sound-absorbing articles (e.g., panels) are sometimes used to reduce noise in, for example, automobiles and other modes of transportation. There exists a need for articles that can absorb acoustical frequencies outside of the range of about 500 Hz to 1400 Hz. Finished articles with curved surfaces would be especially useful in transportation.

Patent application WO2018034949 discloses panels comprising first and second layers and a core disposed there between, wherein the core has a plurality of walls providing a series of connected cells, wherein some of the cell walls have openings providing fluid communication between a series of at least 3 cells, and wherein the opening in a cell wall has an area that is at least 50 percent of the area of a side of that cell wall. The panels may be shaped via thermoforming, via insert molding or via compression molding to provide an article. The panels may be used for absorbing sound in a designed frequency range.

Patent application DE2114181 discloses a laminate of PVC or polyurethane foam with a leather-type surface, together with a film and a non-woven layer that is placed in a stretching frame to be drawn into a mould by vacuum.

Patent application US3963094 discloses an enclosure for isolating noise sources composed of four walls and a ceiling, in which some or all of the sides and top consist of a muffler barrier including one or more air paths transverse to the principal direction of sound transmission through the structure. Various types of component muffler barriers are disclosed which include double leaf structures lined with sound absorbing material where the two leaves are disposed in spaced apart relation and include oppositely disposed air intakes and air exhausts to provide the intervening air paths. The components may comprise corrugated panels of sound absorbing material disposed in face-to-face relation to provide multiple air channels.

### Summary

In a first aspect, a method of making an article is provided. The method includes placing at least a portion of a panel in an injection molding die; and overmolding at least one molded structure on a surface of the panel in the injection molding die, thereby forming a material-to-material connection between the surface of the panel and the molded structure. The molded structure includes a foam composition. The panel includes first and second layers each having first and second opposed major surfaces and a core disposed there between, the second layer being free of any openings between the first and second major surfaces of the second layer. The core has a plurality of walls extending from the second surface of the first layer to the first surface of the second layer providing a series of connected cells, wherein some of the cell walls have openings providing fluid communication between a series of at least 3 cells. Each cell wall has a plurality of sides, each side of a cell wall has an area, and the opening in a cell wall has an area that is at least 50 percent of the area of a side of that cell wall. The first layer has at least a first opening extending between the first and second major surfaces of the first layer into at least one cell in the series.

In a second aspect, an article is provided made by the method according to the first aspect.

In a third aspect, an article is provided. The article includes at least one molded structure disposed on a surface of a panel, having a material-to-material connection between the surface of the panel and the molded structure. The molded structure includes a foam composition. The panel includes first and second layers each having first and second opposed major surfaces and a core disposed there between, the second layer being free of any openings between the first and second major surfaces of the second layer. The core has a plurality of walls extending from the second surface of the first layer to the first surface of the second layer providing a series of connected cells, wherein some of the cell walls have openings providing fluid communication between a series of at least 3 cells. Each cell wall has a plurality of sides, each side of a cell wall has an area, and the opening in a cell wall has an area that is at least 50 percent of the area of a side of that cell wall. The first layer has at least a first opening extending between the first and second major surfaces of the first layer into at least one cell in the series.

Exemplary embodiments of articles described herein can be formed into articles such as panels, walls, or other parts with curved surfaces. In one exemplary method, panels are shaped via thermoforming. In another exemplary method, panels are shaped via insert molding to provide the article.

### Brief Description of the Drawings

FIG. 1A is a top view of an exemplary panel described herein.
FIG. 1B is a cross-sectional view of the exemplary panel described herein shown in FIG. 1A.
FIG. 1C is a perspective view of a cell from FIG. 1A.
FIG. 2A is a schematic cross-sectional view of a panel being inserted between injection mold halves, according to an exemplary method.
FIG. 2B is a schematic cross-sectional view of a shaped panel after closing of the injection mold halves of an injection molding die, according to an exemplary method.
FIG. 2C is a schematic cross-sectional view of an article after overmolding on the shaped panel in the injection molding die, according to an exemplary method.
FIG. 2D is a schematic cross-section view of a panel disposed in an infrared heater, according to an exemplary method.
FIG. 3A is a schematic cross-section view of a panel disposed in an infrared heater, according to an exemplary method.
FIG. 3B is a schematic cross-sectional view of a panel being inserted between thermoforming tool halves, according to an exemplary method.
FIG. 3C is a schematic cross-sectional view of a shaped panel after closing of the thermoforming tool halves, according to an exemplary method.
FIG. 3D is a schematic cross-sectional view of a pre-formed panel, according to an exemplary method.
FIG. 3E is a schematic cross-sectional view of the pre-formed panel disposed in an injection molding die, according to an exemplary method.
FIG. 3F is a schematic cross-sectional view of an article after overmolding on the shaped panel in the injection molding die, according to an exemplary method.

### Detailed Description

It has been discovered that it is possible to injection overmold a foam composition into an acoustically absorbing honeycomb panel. Advantageously, the panel can also be formed to have a shape (other than flat) prior to overmolding the foam onto a surface of the panel. Injection overmolding the foam composition in the injection mold decreases the complexity of handling the materials, as opposed to casting the foam composition on a flat panel followed by shaping the panel. The final article can have variations in thickness and shape to meet requirements of a particular application in both size and acoustic absorption.

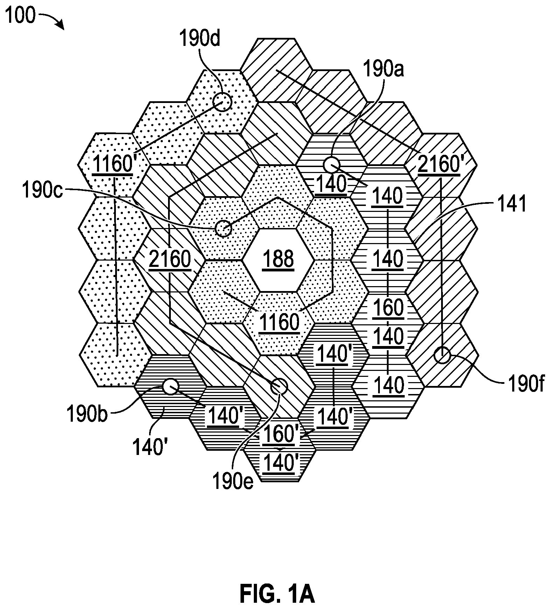

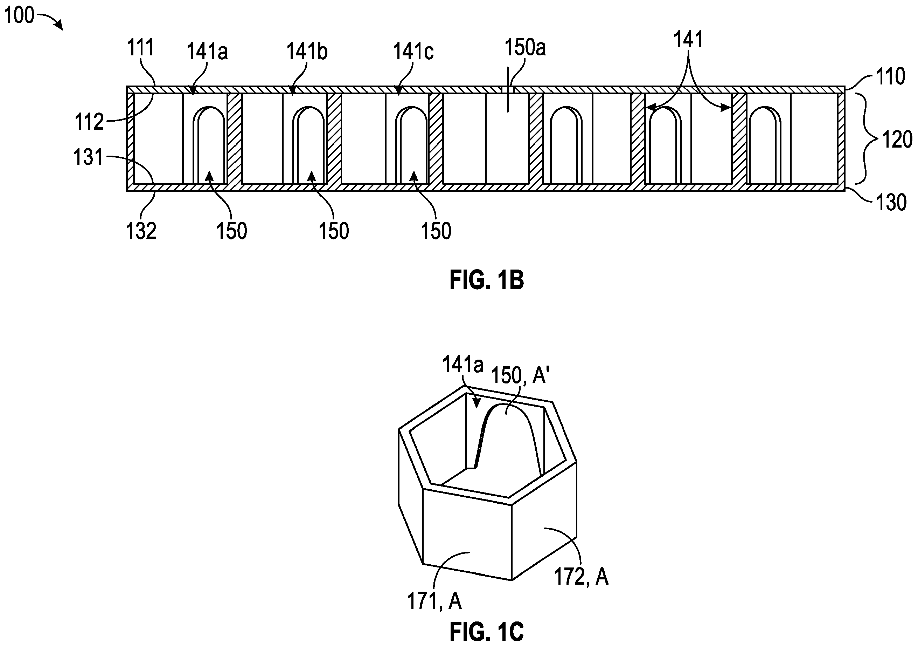

Suitable acoustically absorbing honeycomb panels are described in detail in co-owned application publication WO 2018/034949 (Jonza et al.). Briefly, referring to FIGS. 1A, 1B, and 1C, a panel 100 has first and second layers 110, 130 each having first and second opposed major surfaces, 111, 112, 131, 132 and a core 120 disposed there between. The second layer 130 is free of any openings between the first and second major surfaces 131, 132 of the second layer 130. The core 120 has plurality of walls 141 extending from second surface 112 of first layer 110 to first surface 131 of second layer 130 providing first series 160, 160' of connected cells 140, 140'. Also shown are second and third series of cells 1160, 1160', and 2160, 2160'. Some of the cell walls 141a, 141b, 141c have openings 150 providing fluid communication between the first series 160 of five cells 140. Each cell wall 141 has a plurality of sides 171, 172. Each side 171, 172 of the cell wall 141 has an area A. The opening 150 in the cell wall 141a has area A' that is at least 50 percent of area A. The first layer 110 has at least a first opening 190a, 190b extending between the first and second major surfaces 111, 112 of the first layer 110 into at least one cell in series 160, 160'. Note that openings 190a, 190b, 190c, etc., displayed as circles, but can be any of a variety of shapes including squares, triangles, rectangles, hexagons, or other polygons. Multiple openings could also be used, including openings having at least two holes, or openings which include a woven or non-woven permeable material. In some embodiments, at least 50 (in some embodiments, at least 55, 60, 65, 70, 75, 80, 85, 90, 95, or even at least 100) percent of the openings 150 in a cell wall 141 emanate from either the first layer 110 or the second layer 130. Referring to FIGS. 1B and 1C, the opening 150 can have contours having curved and straight portions, and any straight portions can be either perpendicular to or tilted at another angle to the layers 110 and 130. Optionally, the center cell 188 could have an opening in the first layer 110. In some embodiments, each cell has at least 3 (in some embodiments, at least 4, 5, 6, 7, 8, 9, or even at least 10) walls.

In a first aspect, a method of making an article is provided. The method comprises:
placing at least a portion of a panel in an injection molding die; and
overmolding at least one molded structure on a surface of the panel in the injection molding die, thereby forming a material-to-material connection between the surface of the panel and the molded structure, wherein the molded structure comprises a foam composition,
wherein the panel comprises first and second layers each having first and second opposed major surfaces and a core disposed there between, the second layer being free of any openings between the first and second major surfaces of the second layer, wherein the core has a plurality of walls extending from the second surface of the first layer to the first surface of the second layer providing a series of connected cells, wherein some of the cell walls have openings providing fluid communication between a series of at least 3 cells, wherein each cell wall has a plurality of sides, wherein each side of a cell wall has an area, and wherein the opening in a cell wall has an area that is at least 50 percent of the area of a side of that cell wall, and wherein the first layer has at least a first opening extending between the first and second major surfaces of the first layer into at least one cell in the series.

In a second aspect, an article is provided made by the method according to the first aspect. In a third aspect, another article is provided. The article comprises at least one molded structure disposed on a surface of a panel, having a material-to-material connection between the surface of the panel and the molded structure, wherein the molded structure comprises a foam composition,
wherein the panel comprises first and second layers each having first and second opposed major surfaces and a core disposed there between, the second layer being free of any openings between the first and second major surfaces of the second layer, wherein the core has a plurality of walls extending from the second surface of the first layer to the first surface of the second layer providing a series of connected cells, wherein some of the cell walls have openings providing fluid communication between a series of at least 3 cells, wherein each cell wall has a plurality of sides, wherein each side of a cell wall has an area, and wherein the opening in a cell wall has an area that is at least 50 percent of the area of a side of that cell wall, and wherein the first layer has at least a first opening extending between the first and second major surfaces of the first layer into at least one cell in the series.

The disclosure below relates to each of the first, second, and third aspects.

It was unexpectedly discovered that it is possible to injection mold a curable composition onto an acoustic honeycomb panel with a sufficiently low force to maintain the structure of the panel, e.g., avoid collapsing the panel due to the pressure of injecting and curing the composition when forming an overmolding structure comprising a foam on the panel. Molded structures can be applied to any portion of a panel, such as on at least one major surface of the panel, an edge of the panel, or a shaped part of the panel. Additionally, at least one profile element may be molded directly onto the mold structure, on an edge side of the panel, or both.

Suitable curable compositions include at least one blowing agent and at least one of a polyethylene, a polypropylene, a polyolefin, a polyvinylchloride, a polyurethane, a polyester, a polyamide, a polystyrene, a polyisocyanurate, a silicone, or a copolymer thereof. In some embodiments, the composition can further comprise at least one filler, such as beads, bubbles, fibers, carbon black, a mineral, a fire retardant (described in detail below), or other particles (e.g., macroparticles, microparticles, nanoparticles, nonporous particles, and/or porous particles (such as the porous carbon particles described in co-owned application WO 2019/079695 (Lee et al.)).

In some embodiments, a suitable curable composition comprises Tufcote Acoustical Foam (commercially available from Aearo Technologies, LLC, Indianapolis, IN), which is reported to be based on a toluene diisocyanate (TDI) pre-polymer formed from TDI and a polyether polyol having a molecular weight of 4,800 grams per mole. Additives in the composition include silicone surfactant as a cell stabilizer, amine catalyst, a black pigment dispersion, and a chlorinated phosphate flame retardant. Foam cells are provided by water reacting with the TDI to form carbon dioxide, which foams the composition as it cures.

The blowing agent can be at least one of a chemical blowing agent, a physical blowing agent, or expandable microspheres. Physical blowing agents (PBAs), such as volatile liquid and gas blowing agents, expand when heated and then tend to escape from the mixture, leaving voids behind, to form the foam composition. Suitable physical blowing agents include for instance and without limitation, water, nitrogen, or carbon dioxide. Chemical blowing agents (CBAs) decompose and at least a portion of the decomposition product(s) expand and then escape from the mixture, leaving voids behind. Suitable chemical compound blowing agents include for instance and without limitation, a diazocompound, a sulfonyl hydrazide, a tetrazole, a nitrosocompound, an acyl sulfonyl hydrazide, hydrazones, thiatriazoles, azides, sulfonyl azides, oxalates, thiatrizine dioxides, isotaoic anhydride, or any combination thereof. Expandable microspheres are composed of gas or liquid hydrocarbon PBAs inside a polymer shell. When heated past the glass transition temperature (T_{g}) of the shell, the shell becomes malleable and expands due to the internal pressure of the heated PBA inside. The thickness of the shell and the quantity of PBA encapsulated is tuned to enable isotropic expansion rather than shell rupture, leading to an increase in volume. This process leads to a syntactic foam filled with polymer shells, generally with very uniform foam cell sizes.

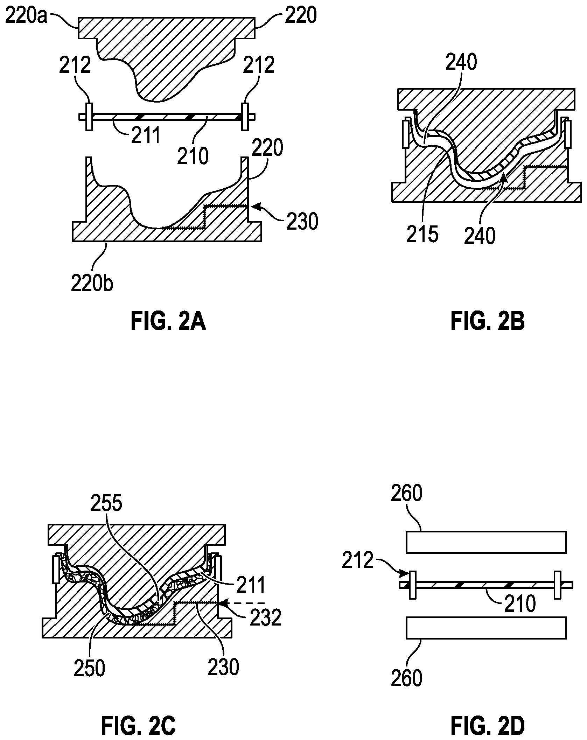

Referring to FIGS. 2A-2D, at least a portion of a panel 210 is clamped in a clamp frame 212 and placed in an injection molding die 220, e.g., between a first injection mold half 220a and a second injection mold half 220b. In the embodiment shown in FIG. 2B, the entire panel 210 is inserted into the injection molding die 220. The two halves 220a and 220b of the injection molding die 220 are then closed, and the panel 210 conforms to the shape between the first half 220a and the second half 220b of the injection molding die 220. Hence, the panel 210 may comprise a shape (e.g., flat) and the shape of the panel 210 is altered inside the injection molding die 220.

As shown in FIG. 2B, a portion 215 of the panel 210 is consolidated by the compression of the injection molding die 220. Optionally, at least one cell of the panel is consolidated and folded over to form a reinforcement bead. In some embodiments, the injection molding die is configured to reduce a thickness of at least a portion of the panel or of the entire panel by 5% to 95% or increase a thickness of at least a portion of the panel or of the entire panel by 5% to 50%. For example, the injection molding die may be shaped to reduce the thickness of a portion or all of a panel by 5% or more, 10% or more, 15% or more, 20% or more, 25% or more, 30% or more, 35% or more, 40% or more, 45% or more, 50% or more, 55% or more, or even 60% or more; and 95% or less, 90% or less, 85% or less, 80% or less, 75% or less, 70% or less, or 65% or less. Typically, the decrease in thickness is a decrease in the thickness of the core of the panel. Likewise, the injection molding die may be shaped to increase the thickness of a portion or all of a panel by 5% or more, 10% or more, 15% or more, 20% or more, 25% or more, or even 30% or more; and 50% or less, 45% or less, 40% or less, or 35% or less. Increasing the thickness of a panel may involve pulling a vacuum in the injection molding die to draw out the panel material.

Moreover, the two halves 220a and 220b of the injection molding die 220 are configured to leave vacant cavity space 240 between at least a portion of the panel 210 and the second half 220b of the injection molding die 220. In some embodiments, the panel is supported in the injection molding die on at least a portion of a first layer of the panel. In other embodiments, the panel is supported in the injection molding die on each of the first layer and the second layer of the panel. In certain embodiments, the panel is unsupported in the injection molding die on each of the first layer and the second layer. The locations of support (if any) will be determined by the design of the final product, in particular where overmolding structure is to be formed on the panel.

The method further comprises overmolding at least one molded structure 250 on a surface 211 of the panel 210 in the injection molding die 220, thereby forming a material-to-material connection 255 between the surface 211 of the panel 210 and the molded structure 250. As used herein, "material-to-material" connection refers to the material of a surface of a panel directly contacting the material of a molded structure, with the exception of at most two intermediate layers, preferably one intermediate layer (or no intermediate layer), such as a primer layer and/or a tie layer that assists to adhere the two materials together optionally being present on at least a portion of the material of the surface of the panel. In the injection molding die 220 of FIG. 2C, an overmolding material 232 is injected through an injection port 230 into the vacant cavity 240. Typically, the molded structure 250 is applied to at least one major surface 211 of the panel 210. To obtain a molded structure that comprises a foam, the molded structure may be formed by providing a curable composition comprising a blowing agent into a vacant cavity in the injection molding die and curing the curable composition to form the foam composition.

In some embodiments, the injection molding die is configured to increase a thickness of at least a portion of the panel or of the entire panel by 5% to 1,000% due to the overmolding in a vacant cavity of the injection molding die. For example, the injection molding die may be shaped to increase the thickness of a portion or all of a panel, due to the presence of an overmolded structure adding to the overall thickness, by 5% or more, 25% or more, 50% or more, 75% or more, 100% or more, 200% or more, 300% or more, 400% or more, or even 500% or more; and 1,000% or less, 900% or less, 800% or less, 700% or less, or 600% or less.

Advantageously, formation of an overmolded structure that comprises a foam provides a wide range of thicknesses of the structure. The flexibility in design of the overmolded structure allows for the article to fit a variety of desired shapes and thicknesses for a particular purpose, e.g., including filling up space in need of acoustic absorption that might otherwise require three, four, five, or more stacked acoustic panels to fill. In some embodiments, the molded structure comprises a thickness of 0.1 mm or greater, 0.25 mm or greater, 0.5 mm or greater, 1 mm or greater, 2 mm or greater, 3 mm or greater, 5 mm or greater, 7 mm or greater, 10 mm or greater, 12 mm or greater, 15 mm or greater, 17 mm or greater, 20 mm or greater, or 25 mm or greater; and a thickness of 76 mm or less, 70 mm or less, 65 mm or less, 60 mm or less, 55 mm or less, 50 mm or less, 45 mm or less, 40 mm or less, 35 mm or less, or 30 mm or less. Stated another way, the molded structure may comprise a thickness of 0.1 millimeters (mm) to 76 mm.

The molded structure optionally comprises a closed cell foam, an open cell foam, or a combination of both closed cell foam and open cell foam. As used herein, an open cell foam means that the foam contains connected cell pathways that extend from one outer surface through the material to another outer surface. In contrast, as used herein, a closed cell foam means that the foam contains substantially no connected cell pathways that extend from one outer surface through the material to another outer surface. A closed cell foam can include up to about 10% open cells, within the meaning of "substantially" no connected cell pathways. Stated another way, the foam composition comprises 90% or greater closed cells, 92% or greater closed cells, 95% or greater closed cells, or 98% or greater closed cells. Achieving a particular cell type (i.e., open and/or closed) depends on the specific blowing agent and curing conditions of the curable composition.

In some embodiments, the molded structure comprises a material exhibiting a hardness of 10 Shore OO or greater, 20 Shore OO or greater, 30 Shore OO or greater, 40 Shore OO or greater, 50 Shore OO or greater, 60 Shore OO or greater, 70 Shore OO or greater, 80 Shore OO or greater, or 90 Shore OO or greater; and a hardness of 90 Shore D or less, 80 Shore D or less, 70 Shore D or less, 60 Shore D or less, 50 Shore D or less, 40 Shore D or less, 30 Shore D or less, 20 Shore D or less, or 10 Shore D or less. Stated another way, the molded structure may comprise a material exhibiting a hardness of 10 Shore OO to 90 Shore D, 10 Shore OO to 70 Shore OO, 80 Shore OO to 30 Shore D, or 10 Shore D to 90 Shore D.

A porous layer such as the molded structure can be generally characterized by its specific acoustic impedance, which is the ratio in frequency space of acoustic pressure to the associated particle speed in an acoustic medium. In the theoretical model based on a rigid film with perforations, for example, the velocity derives from air moving into and out of the holes. If the film is flexible, motion of the wall can contribute to the acoustic impedance calculation. Specific acoustic impedance varies as a function of frequency and is generally a real quantity in progressive plane wave condition, however, the specific acoustic impedance becomes a complex number under the standing plane wave or diverging wave conditions. Therefore, the specific impedance of an acoustic medium reflects the fact that pressure and velocity waves can create phase mismatch between the two properties and this phase mismatch behavior reflects the acoustic absorption performance. When the two components are in phase to each other the maximum acoustic absorption is possible and vice versa when the two components are out of phase to each other. The flow resistance is the low frequency limit of the transfer impedance. Experimentally, this can be estimated by blowing a known, small velocity of air at the molded structure and measuring the pressure drop associated therewith. The flow resistance can be determined as the measured pressure drop divided by the velocity. As used herein, specific acoustic impedance is measured in units of Pa·s/m², which is equivalent to MKS Rayl/m. In some embodiments, the molded structure exhibits an airflow resistance of 4,000 Pa·s/m² or greater, 6,000 Pa·s/m² or greater, 10,000 Pa·s/m² or greater, 15,000 Pa·s/m² or greater, 20,000 Pa·s/m² or greater, 25,000 Pa·s/m² or greater, 30,000 Pa·s/m² or greater, 35,000 Pa·s/m² or greater, or 40,000 Pa·s/m² or greater; and an airflow resistance of 70,000 Pa·s/m² or less, 65,000 Pa·s/m² or less, 60,000 Pa·s/m² or less, 55,000 Pa·s/m² or less, 50,000 Pa·s/m² or less, 45,000 Pa·s/m² or less. Stated another way, the molded structure exhibits an airflow resistance of 4,000 to 70,000 Pa·s/m².

Referring to FIG. 2D, an acoustical panel 210 is optionally preheated outside of the injection mold, e.g., using an infrared heater 260. Closing of the injection mold die 220 shapes the preheated panel 210 as described below in Example 1, such that the overmolding of a foam composition on the shaped panel occurs in a single machine. In some embodiments, the method further comprises cooling the shaped panel prior to overmolding the molded structure on a surface of the panel, such as by exposure to ambient air or circulating a cooling fluid through the injection mold die.

Alternatively, the panel may be thermoformed as described below in Example 2, then inserted into an injection mold for the foam composition to be overmolded on the panel. In some embodiments, thermoforming includes heating the panel and applying force to shape the panel against at least one tool. Typically, the panel is heated to a processing temperature where it becomes compliant. For instance, the panel can be heated to a softening temperature of the first layer, the second layer, or both, of the panel. The panel is then positioned within a mold, between 2 platens prior to the platens closing. The panel is shaped by mechanical force from the tool, or by vacuum or pneumatic pressure followed by a cooling period to return the panel to a rigid structure. Polypropylene (PP) panels can be thermoformed, for example, with the panel pre-heat temperature of 310-350°F (154-177 °C), mold temperature of 150°F (66°C), clamping force of 4,000 lbs. (1,814 kgf) and cooling time of 30 seconds.

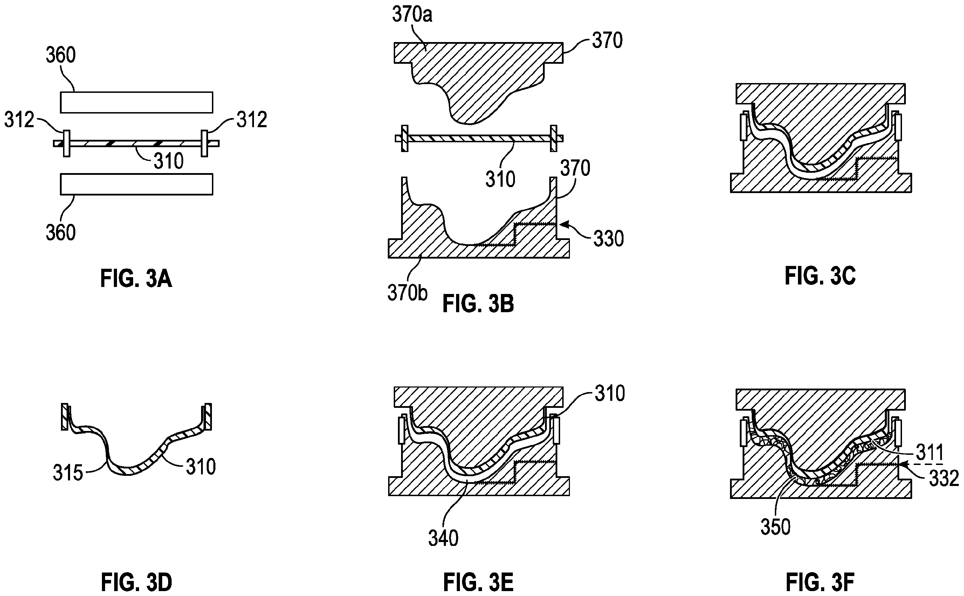

Referring to FIGS. 3A-3F, at least a portion of a panel 310 is clamped in a clamp frame 312 and placed in a thermoforming machine 370, e.g., between a first thermoforming tool half 370a and a second thermoforming tool half 370b. The panel 310 is optionally preheated outside of the thermoforming machine, e.g., using an infrared heater 360, as shown in FIG. 3A. In the embodiment of FIG. 3B, the entire panel 310 is inserted into the thermoforming machine 370. The two tool halves 370a and 370b of the thermoforming machine 370 are then closed, and the panel 310 conforms to the shape between the first half 370a and the second half 370b of the thermoforming machine 370. As shown in FIG. 3C, a portion 315 of the panel 310 is consolidated by the compression of the thermoforming machine 370.

Referring to FIG. 3D, in a separate step, the pre-formed panel 310 is removed from the thermoforming machine. Next, the pre-formed panel 310 is inserted between two halves 320a and 320b of an injection molding die 320, which are configured to provide a vacant cavity space 340 between at least a portion of the panel 310 and the second half 320b. The method further comprises overmolding at least one molded structure 350 on a surface 311 of the panel 310 in the injection molding die 320, thereby forming a material-to-material connection 355 between the surface 311 of the panel 310 and the molded structure 350. In the injection molding die 320 of FIG. 3F, an overmolding material 332 is injected through an injection port 330 into the vacant cavity 340, thereby forming the article. Typically, the molded structure 350 is applied to at least one major surface 311 of the panel 310.

Accordingly, methods for making articles from panels can comprise shaping a panel described herein via insert molding to provide the article. In some embodiments, putting a pre-heated panel inside of an injection mold tool, closing the tool, and injection molding a foam composition on the panel to provide the article. The mold closing action forms the panel into a three-dimensional shape while the overmolded structure comprising foam provides additional acoustic absorption of the final article. The mold closing force may be enough to shape the panel, or thermoforming/compression molding performed prior to insert molding may be required; in either case, pre-heating the formed panel may not be necessary. In certain embodiments, the panel is perforated by the injection mold. A panel undergoing overmolding may be flat or alternatively comprise a (e.g., three-dimensional) shape. For a panel that has already been shaped, the method may further comprise altering the shape of the panel (e.g., "reshaping" the panel) in the injection molding die. In certain embodiments, at least one cell is consolidated and folded over to form a reinforcement bead. When a number of adjacent cells are consolidated and folded over they can form a "hem" having a thickness approximately equal to twice the thickness of the first and second layers of the panel.

Suitable methods optionally further comprise at least partially shaping a (flat) panel using thermoforming or compression molding prior to placing at least a portion of the panel within the injection molding die, e.g., using vacuum, pressure, or matched mold forming to shape the panel. Materials used in matched mold forming are not particularly limited, and include for instance and without limitation, metal, plywood, or epoxy board (e.g., available under the trade designation "RENSHAPE", from OBO-Werke GmbH, Stadthagen, Germany). In some embodiments, putting a panel inside of a mold between 2 platens, heating the mold, closing the platens to shape the panel while maintaining pressure during a mold cooling stage provides the article. In some embodiments, the panel must be pre-heated prior to closing the mold to ensure material compliance. Exemplary polypropylene (PP) panels can be compression molded, for example, without panel pre-heating, thermal cycling mold temperatures of 305°F (152°C) and 150°F (66°C), clamping force of 30,000 lbs. (13,607 kgf) and cooling/pressure holding time of 30 seconds.

In some embodiments, the first layer of the panel comprises at least one opening between the first and second major surfaces of the first layer, and the method further comprises plugging the at least one opening prior to overmolding the at least one molded structure on a surface of the panel in the injection molding die. An opening may be plugged by a pin selected to have a diameter large enough to fit in the opening but minimize entry of curable composition into the opening during the overmolding process.

In some embodiments, panels have a thickness of 4 millimeters (mm) or greater, 6 mm or greater, 8 mm or greater, 10 mm or greater, 12 mm or greater, 14 mm or greater, or 16 mm or greater; and a thickness of 25 mm or less, 23 mm or less, 21 mm or less, 19 mm or less, 17 mm or less, 15 mm or less, 14 mm or less, 12 mm or less, 10 mm or less, or 8 mm or less. Stated another way, panels may have a thickness in a range from 4 mm to 8 mm, 6 mm to 10 mm, 8 mm to 15 mm, or 4 mm to 25 mm.

In some embodiments, each cell of a panel has a largest distance between two opposed walls of at least 3 mm (in some embodiments, at least 5 mm, 10 mm, 15 mm, 20 mm, 25 mm, or even at least 30 mm; in some embodiments, in a range from 3 mm to 30 mm, 7 mm to 30 mm, 15 mm to 30 mm, or even 20 mm to 30 mm). In some embodiments of panels, each cell has a largest distance between two opposed vertices of at least 5 mm (in some embodiments, at least 10 mm, 15 mm, 20 mm, 25 mm, 30 mm, 35 mm, or even at least 40 mm; in some embodiments, in a range from 15 mm to 40 mm, 20 mm to 40 mm, or even 30 mm to 40 mm).

In some embodiments, each cell of a panel has a distance from the second surface of the first layer to the first surface of the second layer of at least 2 mm (in some embodiments, at least 3 mm, 4 mm, 5 mm, 6 mm, 7 mm, 8 mm, 9 mm, 10 mm, or even at least 15 mm; in some embodiments, in a range from 4 mm to 15 mm, 7 mm to 15 mm, or even 10 mm to 15 mm).

In some embodiments of panels, each cell has a volume of at least 0.04 cm³ (in some embodiments, at least 0.1 cm³, 0.5 cm³, 1 cm³, 2 cm³, 3 cm³, 4 cm³, 5 cm³, 10 cm³, 15 cm³, 20 cm³, 25 cm³, or even at least 30 cm³; in some embodiments, in a range from 0.04 cm³ to 30 cm³, 0.1 cm³ to 30 cm³, 0.5 cm³ to 30 cm³, 2 cm³ to 30 cm³, or even 15 cm³ to 30 cm³). In some embodiments of panels, a series of cells has a cumulative volume of at least 0.5 cm³ (in some embodiments, at least 1 cm³, 1.5 cm³, 2 cm³, 3 cm³, 4 cm³, 5 cm³, 10 cm³, 25 cm³, 50 cm³, 75 cm³, 100 cm³, 150 cm³, or even at least 200 cm³; in some embodiments, in a range from 1.5 cm³ to 200 cm³, 10 cm³ to 120 cm³, or even 50 cm³ to 200 cm³).

In some embodiments of panels, a first series of cells comprises at least 4 (in some embodiments, at least 5, 6, 7, 8, 9, 10, 11, 12, 13, 14, 15, 16, 17, 18, 19, 20, 21, 22, 23, 24, 25, 26, 27, 28, 29, 30 or more) cells. In some embodiments, panels further comprise a second series of at least 3 (in some embodiments, at least 4, 5, 6, 7, 8, 9, 10, 11, 12, 13, 14, 15, 16, 17, 18, 19, 20, 21, 22, 23, 24, 25, 26, 27, 28, 29, 30 or more) cells. In some embodiments, panels further comprise a third series of at least 3 (in some embodiments, at least 4, 5, 6, 7, 8, 9, 10, 11, 12, 13, 14, 15, 16, 17, 18, 19, 20, 21, 22, 23, 24, 25, 26, 27, 28, 29, 30 or more) cells. In some embodiments of panels, a series of cells has a cumulative length of at least 20 mm (in some embodiments, at least 30 mm, 40 mm, 50 mm, 75 mm, 100 mm, 150 mm, or even at least 200 mm; in some embodiments, in a range from 30 mm to 200 mm, 50 mm to 200 mm, or even 100 mm to 200 mm).

In some embodiments of panels, the first layer comprises at least one of polymeric, metallic, ceramic, or composite materials (e.g., fiber reinforced, woven or non-woven in a resin matrix). In some embodiments of panels described herein, the second layer comprises at least one of polymeric, metallic, ceramic, or composite materials (e.g., fiber reinforced, woven or non-woven in a resin matrix). In some embodiments of panels described herein, the core comprises at least one of polymeric, metallic, ceramic, or composite materials (e.g., fiber reinforced, woven or non-woven in a resin matrix).

Exemplary polymeric materials include polyethylenes, polypropylenes, polyolefins, polyvinylchlorides, polyurethanes, polyesters, polyamides, polystyrene, copolymers thereof, and combinations thereof (including blends). The polymeric materials may be thermosetting by, for example, heat or ultraviolet (UV) radiation, or thermoplastic. In some embodiments, the molded structure and the panel comprise the same type(s) of polymer.

Exemplary metallic materials include aluminum, steel, nickel, copper, brass, bronze, and alloys thereof. Exemplary ceramic (including glass, glass-ceramic, and crystalline ceramic) materials include oxides, nitrides, and carbides. Exemplary fiber containing materials include fibers such as cellulose, carbon, thermoplastic fibers (polyamide, polyester, and aramid, polyolefin), steel, and glass, as may be applicable to the particular type of material. In some embodiments, materials for panels may be in the form of multilayers.

Optionally, materials for panels may also include fillers, colorants, plasticizers, dyes, etc., as may be applicable to the particular type of material.

In some embodiments, panels further comprise a tie layer on at least a portion of the second of the major surface of the first layer. In some embodiments, panels described herein further comprising a tie layer on at least a portion of the first of the major surface of the second layer. Although not wanting to be bound by theory, the tie layer is believed to facilitate adhesion between first or second layer 110, 130 and core layer 120.

In some embodiments, a panel may be surface treated, such as by treating a surface of the panel to increase adhesion of the molded structure to the panel. The surface on which a curable composition is to be molded can be treated to improve adhesion between the panel surface and the molded structure using typical treatment methods, e.g., chemical treatment (e.g., primer layer), corona treatment such as air or nitrogen corona, plasma, flame, or actinic radiation.

In some embodiments, methods further comprise disposing a substrate facing into an injection molding die at a distance from the panel and attaching the substrate to the molded structure when the foam composition forms, such that the molded structure is disposed between the panel and the substrate in the final article. Suitable substrates include for instance, a polymeric film, a woven material, a nonwoven material (e.g., a microperforated film), or a combination thereof. In select embodiments, the substrate can provide acoustic properties to the final article. In some embodiments, the substrate may provide a function such as in-mold labelling or further tuning acoustic properties of the foam composition.

In some embodiments, articles described herein exhibit at least one absorption band less than 1400 Hz (in some embodiments, less than 1300 Hz, or even less than 1200 Hz). In some embodiments, articles described herein exhibit at least one absorption band in a range from at least 400 Hz to 1200 Hz (in some embodiments, in a range from at least 500 Hz to 1300 Hz, at least 200 Hz to 1400 Hz, at least 100 Hz to 1400 Hz, or even at least 20 Hz to 1400 Hz). The molded structure itself may exhibit at least one absorption band in a range from 100 Hz to 800 Hz, such as 200 Hz to 800 Hz, 300 Hz to 800 Hz, 400 Hz to 800 Hz, 500 Hz to 800 Hz, or 600 Hz to 800 Hz. In some embodiments, articles described herein exhibit an acoustical absorption of at least 50 (in some embodiments, at least 55, 60, 65, 70, 75, or even 80) percent. The absorption bands of articles and the acoustical absorption of panels are measured as described in the Examples using the "Normal Incidence Acoustical Absorption Test" and the "Reverberation Chamber Test."

Both modeling and physical experimental measurements have shown that the acoustic absorption behavior of a honeycomb panel is a function of each of the panel thickness, cell sizes, passageway percentage, skin hole sizes, and number of connected cells. This is demonstrated in Jonza, J., Herdtle, T., Kalish, J., Gerdes, R. et al., "Acoustically Absorbing Lightweight Thermoplastic Honeycomb Panels," SAE Int. J. Veh. Dyn., Stab., and NVH 1(2):2017, doi: 10.4271/2017-01-1813, incorporated herein by reference. For instance, 1) as the number of connected cells is increased, the frequency of the peak absorption decreases; 2) as the skin hole size (whether provided by one hole or multiple holes) increases, the frequency of the peak absorption increases; 3) as the width of the cell decreases, more cells need to be connected to exhibit absorption at the same frequency; 4) as the cell height decreases, the frequency of the peak absorption increases; 5) as the passageway size decreases, the frequency of the peak absorption decreases (plus with less total absorption and narrower absorption peaks); and 6) as the skin thickness increases, the frequency of peak absorption decreases. Hence, multiple variables can be adjusted to optimize (e.g., tune) the acoustic absorption of a panel or article for a particular end use application.

Exemplary embodiments can be formed articles such as automotive parts, such as engine covers, wheel well liners, underbody shields, headliners, trunk covers, floor mats, carpet backings, hood liners, and tonneau covers, housings for generators, motors, appliances, tools, etc., and in general, any item emitting sound; architectural walls, panels, floors, doors, enclosures, ducts, sound barriers, etc., aircraft, watercraft, trucks, trains, agricultural equipment, fork lifts, and trailers.

The panels can find utility as an engine cover. In such cases, it will likely be useful to use polymers with high temperature resistance and flame retardant properties. Suitable polymers include for instance and without limitation, polyamides including PA6, PA66, polybutylene terephthalate (PBT), poly ethylene terephthalate (PET), poly ethylene naphthalate (PEN), polyphenylene sulfide (PPS), Polyether imide (PEI), Polyether sulfone (PES), Polyether ketone (PEK) and Polyether ether ketone (PEEK) and fluoropolymers.

Moreover, additives such as flame retardants are typically added to heat resistant polymeric materials to provide further protection during high temperature applications. Useful flame retardants include for instance and without limitation, inorganics such as alumina trihydrate (ATH), huntite and hydromagnesite, various hydrates, phosphorus, boron compounds, antimony trioxide and pentoxide and sodium antimonate; halogenated compounds such as organochlorines including chlorendic acid derivatives and chlorinated paraffins; organobromines such as decabromodiphenyl ether (decaBDE), decabromodiphenyl ethane, polymeric brominated compounds, brominated carbonate oligomers (BCOs), brominated epoxy oligomers (BEOs), tetrabromophthalic anyhydride, tetrabromobisphenol A (TBBPA) and hexabromocyclododecane (HBCD); organophosphates such as triphenyl phosphate (TPP), resorcinol bis(diphenylphosphate) (RDP), bisphenol A diphenyl phosphate (BADP), and tricresyl phosphate (TCP); phosphonates such as dimethyl methylphosphonate (DMMP); and phosphinates such as aluminium diethyl phosphinate; compounds containing both phosphorus and a halogen such as tris(2,3-dibromopropyl) phosphate(brominated tris) and chlorinated organophosphates such as tris(1,3-dichloro-2-propyl)phosphate (chlorinated tris or TDCPP) and tetrakis(2-chlorethyl)dichloroisopentyldiphosphate.

The acoustical spectrum of an engine depends on many factors including engine design, load and rotations per minute (rpm). The articles of the present disclosure may thus need to be tuned to several prominent frequencies.

Advantages and embodiments of this invention are further illustrated by the following examples, but the particular materials and amounts thereof recited in these examples, as well as other conditions and details, should not be construed to unduly limit this invention. All parts and percentages are by weight unless otherwise indicated.

### Example 1: single step process (Prophetic)

An approximately 8-millimeter (mm) thick polypropylene acoustically absorbing honeycomb panel made according to the Honeycomb Panel Preparation method described in WO 2018/034949 (Jonza et al.) is loaded into the clamp frame of an industrial robot (e.g., Fanuc Mi10/12s, Fanuc, Echternach, Luxembourg). The robot positions the panel within an IR heating oven and holds the panel until a critical softening temperature of the panel skin is reached (e.g., approximately 150-165°C). The panel is quickly transferred between the injection mold halves of an injection molding machine (e.g., Engel 100TL, ENGEL AUSTRIA GmbH, Schwertberg, Austria) and the mold closing sequence is initiated, subsequently forming the panel until the mold is fully clamped. In the fully clamped position, the acoustic panel may be fully supported on both sides, it may be only supported on one side, it is possible to be unsupported on both sides or it is able to be consolidated to a thickness below 8 mm and potentially perforated by the injection mold steel. Next, the injection molding machine's injection unit actuates, providing an open or closed cell foam overmolding material into the vacant cavity regions or space where the acoustic panel is unsupported.

### Example 2: dual step process (Prophetic)

An approximately 8-mm thick polypropylene acoustically absorbing honeycomb panel made according to the Honeycomb Panel Preparation method described in WO 2018/034949 (Jonza et al.) is loaded into the clamp frame of a thermoforming machine (e.g., MAAC C5535SPT, MAAC MACHINERY, Carol Stream, IL). The thermoforming machine positions the panel within an IR heating oven and holds the panel until a critical softening temperature of the panel skin is reached (e.g., approximately 150-165°C). The panel is quickly transferred between the thermoforming tool halves and the tool closing sequence is initiated, subsequently forming the panel until the mold is fully clamped at which point air pressure or vacuum may be applied to further shape the panel. After a cooling duration, the tool is opened and the formed panel is removed from clamp frame.

In the next step of the process, the pre-formed panel is loaded within the injection mold of an injection molding machine (e.g., Engel 100TL) and the mold is closed fully. The injection molding machine's injection unit actuates, providing an open or closed cell foam overmolding material into the vacant cavity regions or space where the acoustic panel is unsupported.

Foreseeable modifications and alterations of this disclosure will be apparent to those skilled in the art The scope of this invention is defined by the appended claims and should not be restricted to the embodiments that are set forth in this application for illustrative purposes.

## Claims

1. A method of making an article, the method comprising:
placing at least a portion of a panel in an injection molding die; and
overmolding at least one molded structure on a surface of the panel in the injection molding die, thereby forming a material-to-material connection between the surface of the panel and the molded structure, wherein the molded structure comprises a foam composition,
wherein the panel comprises first and second layers each having first and second opposed major surfaces and a core disposed there between, the second layer being free of any openings between the first and second major surfaces of the second layer, wherein the core has a plurality of walls extending from the second surface of the first layer to the first surface of the second layer providing a series of connected cells, wherein some of the cell walls have openings providing fluid communication between a series of at least 3 cells, wherein each cell wall has a plurality of sides, wherein each side of a cell wall has an area, and wherein the opening in a cell wall has an area that is at least 50 percent of the area of a side of that cell wall, and wherein the first layer has at least a first opening extending between the first and second major surfaces of the first layer into at least one cell in the series.

2. The method of claim 1, wherein the molded structure comprises a polyethylene, a polypropylene, a polyolefin, a polyvinylchloride, a polyurethane, a polyester, a polyamide, a polystyrene, a polyisocyanurate, a silicone, or a copolymer thereof.

3. The method of claim 1 or claim 2, further comprising preheating the panel to a softening temperature of the first layer of the panel prior to placing it within the injection molding die.

4. The method of any of claims 1 to 3, wherein the panel is supported in the injection molding die on at least a portion of the first layer.

5. The method of any of claims 1 to 3, wherein the panel is unsupported in the injection molding die on each of the first layer and the second layer.

6. The method of any of claims 1 to 5, wherein the molded structure is applied to at least one major surface of the panel.

7. The method of any of claims 1 to 6, wherein the entire panel is inserted into the injection molding die.

8. The method of any of claims 1 to 7, wherein the panel comprises a shape, and the method further comprises altering the shape of the panel in the injection molding die.

9. The method of any of claims 1 to 8, wherein at least one cell is consolidated and folded over to form a reinforcement bead.

10. The method of any of claims 1 to 9, wherein the injection molding die is configured to reduce a thickness of at least a portion of the panel by 5% to 95% or to increase a thickness of at least a portion of the panel by 5% to 1,000%.

11. The method of any of claims 1 to 10, further comprising at least partially shaping the panel using thermoforming or compression molding prior to placing at least a portion of the panel within the injection molding die.

12. The method of any of claims 1 to 11, wherein the molded structure is formed by providing a curable composition comprising a blowing agent into a vacant cavity in the injection molding dies and curing the curable composition to form the foam composition.

13. The method of any of claims 1 to 12, wherein the first layer of the panel comprises at least one opening between the first and second major surfaces of the first layer, and wherein the method further comprises plugging the at least one opening prior to overmolding the at least one molded structure on a surface of the panel in the injection molding die.

14. The method of any of claims 1 to 13, further comprising disposing a substrate facing into the injection molding die and a distance from the panel and attaching the substrate to the molded structure when the foam composition forms, wherein the molded structure is disposed between the panel and the substrate.

15. An article comprising at least one molded structure disposed on a surface of a panel, having a material-to-material connection between the surface of the panel and the molded structure, wherein the molded structure comprises a foam composition,
wherein the panel comprises first and second layers each having first and second opposed major surfaces and a core disposed there between, the second layer being free of any openings between the first and second major surfaces of the second layer, wherein the core has a plurality of walls extending from the second surface of the first layer to the first surface of the second layer providing a series of connected cells, wherein some of the cell walls have openings providing fluid communication between a series of at least 3 cells, wherein each cell wall has a plurality of sides, wherein each side of a cell wall has an area, and wherein the opening in a cell wall has an area that is at least 50 percent of the area of a side of that cell wall, and wherein the first layer has at least a first opening extending between the first and second major surfaces of the first layer into at least one cell in the series.

## Patentansprüche

1. Ein Verfahren zum Herstellen eines Gegenstands, das Verfahren aufweisend:
Platzieren mindestens eines Abschnitts einer Platte in einer Spritzgussform; und
Umspritzen mindestens einer gegossenen Struktur auf einer Oberfläche der Platte in der Spritzgussform, wodurch eine stoffschlüssige Verbindung zwischen der Oberfläche der Platte und der gegossenen Struktur ausgebildet wird, wobei die gegossene Struktur eine Schaumzusammensetzung aufweist,
wobei die Platte eine erste und eine zweite Schicht aufweist, die jeweils eine erste und eine zweite Hauptoberfläche und einen dazwischen angeordneten Kern umfassen, wobei die zweite Schicht frei von beliebigen Öffnungen zwischen der ersten und der zweiten Hauptoberfläche der zweiten Schicht ist, wobei der Kern eine Mehrzahl von Wänden umfasst, die sich von der zweiten Oberfläche der ersten Schicht zu der ersten Oberfläche der zweiten Schicht erstrecken und eine Reihe von verbundenen Zellen bereitstellen, wobei einige der Zellwände Öffnungen umfassen, die zwischen einer Reihe von mindestens 3 Zellen eine Fluidverbindung bereitstellen, wobei jede Zellwand eine Mehrzahl von Seiten umfasst, wobei jede Seite einer Zellwand eine Fläche umfasst, und wobei die Öffnung in einer Zellwand eine Fläche umfasst, die mindestens 50 Prozent der Fläche einer Seite dieser Zellwand ist, und wobei die erste Schicht mindestens eine Öffnung umfasst, die sich zwischen der ersten und der zweiten Hauptfläche der ersten Schicht in mindestens eine Zelle in der Reihe erstreckt.

2. Das Verfahren nach Anspruch 1, wobei die gegossene Struktur ein Polyethylen, ein Polypropylen, ein Polyolefin, ein Polyvinylchlorid, ein Polyurethan, einen Polyester, ein Polyamid, ein Polystyrol, ein Polyisocyanurat, ein Silikon oder ein Copolymer davon aufweist.

3. Das Verfahren nach Anspruch 1 oder 2, ferner aufweisend ein Vorwärmen der Platte auf eine Erweichungstemperatur der ersten Schicht der Platte vor einem Platzieren davon innerhalb der Spritzgussform.

4. Das Verfahren nach einem der Ansprüche 1 bis 3, wobei die Platte in der Spritzgussform auf mindestens einem Anschnitt der ersten Schicht gestützt wird.

5. Das Verfahren nach einem der Ansprüche 1 bis 3, wobei die Platte in der Spritzgussform auf jeder der ersten und der zweiten Schicht nicht gestützt wird.

6. Das Verfahren nach einem der Ansprüche 1 bis 5, wobei die gegossene Struktur auf mindestens eine Hauptoberfläche der Platte aufgebracht wird.

7. Das Verfahren nach einem der Ansprüche 1 bis 6, wobei die gesamte Platte in die Spritzgussform eingelegt wird.

8. Das Verfahren nach einem der Ansprüche 1 bis 7, wobei die Platte eine Gestalt aufweist und das Verfahren ferner ein Ändern der Gestalt der Platte in der Spritzgussform aufweist.

9. Das Verfahren nach einem der Ansprüche 1 bis 8, wobei mindestens eine Zelle verfestigt und umgefaltet wird, um eine Verstärkungswulst auszubilden.

10. Das Verfahren nach einem der Ansprüche 1 bis 9, wobei die Spritzgussform konfiguriert ist, um eine Dicke von mindestens einem Abschnitt der Platte um 5 % bis 95 % zu reduzieren oder eine Dicke von mindestens einem Abschnitt der Platte um 5 % bis 1.000 % zu erhöhen.

11. Das Verfahren nach einem der Ansprüche 1 bis 10, ferner aufweisend mindestens teilweises Gestalten der Platte unter Verwendung von Thermoformen oder Druckpressen vor einem Platzieren mindestens eines Teils der Platte innerhalb der Spritzgussform.

12. Das Verfahren nach einem der Ansprüche 1 bis 11, wobei die gegossene Struktur durch ein Bereitstellen einer härtbaren Zusammensetzung, aufweisend ein Treibmittel, in einen freien Hohlraum in den Spritzgussformen und ein Aushärten der härtbaren Zusammensetzung ausgebildet wird, um die Schaumzusammensetzung auszubilden.

13. Das Verfahren nach einem der Ansprüche 1 bis 12, wobei die erste Schicht der Platte mindestens eine Öffnung zwischen der ersten und der zweiten Hauptoberfläche der ersten Schicht aufweist, und wobei das Verfahren ferner ein Verschließen der mindestens einen Öffnung vor dem Umspritzen der mindestens einen gegossenen Struktur auf einer Oberfläche der Platte in der Spritzgussform aufweist.

14. Das Verfahren nach einem der Ansprüche 1 bis 13, ferner aufweisend das Anordnen eines Substrats in Richtung der Spritzgussform gewandt und in einem Abstand von der Platte und ein Befestigen des Substrats an der gegossenen Struktur bei dem Ausbilden der Schaumzusammensetzung, wobei die gegossene Struktur zwischen der Platte und dem Substrat angeordnet ist.

15. Ein Gegenstand, aufweisend mindestens eine gegossene Struktur, die auf einer Oberfläche einer Platte angeordnet ist, die zwischen der Oberfläche der Platte und der gegossenen Struktur eine Material-zu-Material-Verbindung umfasst, wobei die gegossene Struktur eine Schaumzusammensetzung aufweist,
wobei die Platte eine erste und eine zweite Schicht aufweist, die jeweils eine erste und eine zweite Hauptoberfläche und einen dazwischen angeordneten Kern umfassen, wobei die zweite Schicht frei von beliebigen Öffnungen zwischen der ersten und der zweiten Hauptoberfläche der zweiten Schicht ist, wobei der Kern eine Mehrzahl von Wänden umfasst, die sich von der zweiten Oberfläche der ersten Schicht zu der ersten Oberfläche der zweiten Schicht erstrecken und eine Reihe von verbundenen Zellen bereitstellen, wobei einige der Zellwände Öffnungen umfassen, die zwischen einer Reihe von mindestens 3 Zellen eine Fluidverbindung bereitstellen, wobei jede Zellwand eine Mehrzahl von Seiten umfasst, wobei jede Seite einer Zellwand eine Fläche umfasst, und wobei die Öffnung in einer Zellwand eine Fläche umfasst, die mindestens 50 Prozent der Fläche einer Seite dieser Zellwand ist, und wobei die erste Schicht mindestens eine Öffnung umfasst, die sich zwischen der ersten und der zweiten Hauptfläche der ersten Schicht in mindestens eine Zelle in der Reihe erstreckt.

## Revendications

1. Procédé de fabrication d'un article, le procédé comprenant :
la mise en place d'au moins une partie d'un panneau dans une matrice de moulage par injection ; et
le surmoulage d'au moins une structure moulée sur une surface du panneau dans la matrice de moulage par injection, ce qui forme une liaison de matériau à matériau entre la surface du panneau et la structure moulée, dans lequel la structure moulée comprend une composition de mousse,
dans lequel le panneau comprend des première et seconde couches ayant chacune des première et seconde surfaces principales opposées et une âme disposée entre elles, la seconde couche étant exempte de quelconques ouvertures entre les première et seconde surfaces principales de la seconde couche, dans lequel l'âme a une pluralité de parois s'étendant de la seconde surface de la première couche à la première surface de la seconde couche fournissant une série de cellules reliées, dans lequel certaines des parois de cellule ont des ouvertures assurant une liaison fluidique entre une série d'au moins 3 cellules, dans lequel chaque paroi de cellule a une pluralité de côtés, dans lequel chaque côté d'une paroi de cellule a une aire, et dans lequel l'ouverture dans une paroi de cellule a une aire qui vaut au moins 50 % de l'aire d'un côté de cette paroi de cellule, et dans lequel la première couche a au moins une première ouverture s'étendant entre les première et seconde surfaces principales de la première couche dans au moins une cellule dans la série.

2. Procédé selon la revendication 1, dans lequel la structure moulée comprend un polyéthylène, un polypropylène, une polyoléfine, un polychlorure de vinyle, un polyuréthane, un polyester, un polyamide, un polystyrène, un polyisocyanurate, un silicone ou un copolymère de ceux-ci.

3. Procédé selon la revendication 1 ou 2, comprenant en outre le préchauffage du panneau à une température de ramollissement de la première couche du panneau avant de le placer dans la matrice de moulage par injection.

4. Procédé selon l'une quelconque des revendications 1 à 3, dans lequel le panneau est soutenu dans la matrice de moulage par injection sur au moins une partie de la première couche.

5. Procédé selon l'une quelconque des revendications 1 à 3, dans lequel le panneau n'est pas soutenu dans la matrice de moulage par injection sur la première couche et la seconde couche.

6. Procédé selon l'une quelconque des revendications 1 à 5, dans lequel la structure moulée est appliquée à au moins une surface principale du panneau.

7. Procédé selon l'une quelconque des revendications 1 à 6, dans lequel le panneau entier est inséré dans la matrice de moulage par injection.

8. Procédé selon l'une quelconque des revendications 1 à 7, dans lequel le panneau comprend une forme, et le procédé comprend en outre la modification de la forme du panneau dans la matrice de moulage par injection.

9. Procédé selon l'une quelconque des revendications 1 à 8, dans lequel au moins une cellule est consolidée et repliée pour former un bourrelet de renforcement.

10. Procédé selon l'une quelconque des revendications 1 à 9, dans lequel la matrice de moulage par injection est conçue pour réduire une épaisseur d'au moins une partie du panneau de 5 % à 95 % ou pour augmenter une épaisseur d'au moins une partie du panneau de 5 % à 1 000 %.

11. Procédé selon l'une quelconque des revendications 1 à 10, comprenant en outre la mise en forme au moins partielle du panneau par thermoformage ou moulage par compression avant de placer au moins une partie du panneau dans la matrice de moulage par injection.

12. Procédé selon l'une quelconque des revendications 1 à 11, dans lequel la structure moulée est formée par la fourniture d'une composition durcissable comprenant un agent gonflant dans une cavité vacante dans les matrices de moulage par injection et en durcissant la composition durcissable pour former la composition de mousse.

13. Procédé selon l'une quelconque des revendications 1 à 12, dans lequel la première couche du panneau comprend au moins une ouverture entre les première et seconde surfaces principales de la première couche, et dans lequel le procédé comprend en outre le bouchage de l'au moins une ouverture avant le surmoulage de l'au moins une structure moulée sur une surface du panneau dans la matrice de moulage par injection.

14. Procédé selon l'une quelconque des revendications 1 à 13, comprenant en outre la disposition d'un substrat tourné vers la matrice de moulage par injection et à une certaine distance du panneau, et la fixation du substrat à la structure moulée lorsque la composition de mousse se forme, dans lequel la structure moulée est disposée entre le panneau et le substrat.

15. Article comprenant au moins une structure moulée disposée sur une surface d'un panneau, ayant une liaison de matériau à matériau entre la surface du panneau et la structure moulée, dans lequel la structure moulée comprend une composition de mousse,
dans lequel le panneau comprend des première et seconde couches ayant chacune des première et seconde surfaces principales opposées et une âme disposée entre elles, la seconde couche étant exempte de quelconques ouvertures entre les première et seconde surfaces principales de la seconde couche, dans lequel l'âme a une pluralité de parois s'étendant de la seconde surface de la première couche à la première surface de la seconde couche fournissant une série de cellules reliées, dans lequel certaines des parois de cellule ont des ouvertures assurant une liaison fluidique entre une série d'au moins 3 cellules, dans lequel chaque paroi de cellule a une pluralité de côtés, dans lequel chaque côté d'une paroi de cellule a une aire, et dans lequel l'ouverture dans une paroi de cellule a une aire qui vaut au moins 50 % de l'aire d'un côté de cette paroi de cellule, et dans lequel la première couche a au moins une première ouverture s'étendant entre les première et seconde surfaces principales de la première couche dans au moins une cellule dans la série.
